(19) **Europäisches Patentamt**
**European Patent Office**
**Office européen des brevets**

(11) **EP 2 796 333 B1**

(12) **EUROPEAN PATENT SPECIFICATION**

(45) Date of publication and mention
of the grant of the patent:
**20.02.2019 Bulletin 2019/08**

(51) Int Cl.:
**B60W 50/14** *(2012.01)*       **B60W 30/14** *(2006.01)*
**G08G 1/052** *(2006.01)*       **G08G 1/0962** *(2006.01)*

(21) Application number: **13380018.5**

(22) Date of filing: **26.04.2013**

(54) **Speed detection system and compliance monitoring**

Geschwindigkeitsmesssystem und Einhaltungsüberwachung

Système de détection de vitesse et de surveillance de conformité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.10.2014 Bulletin 2014/44**

(73) Proprietor: **ITCiCo Spain, S.L.**
**07001 Palma de Mallorca (ES)**

(72) Inventor: **Braden, Jude**
**Santa Maria del Cami**
**07320 Mallorca (ES)**

(74) Representative: **Lehmann Novo, Maria Isabel et al**
**Lehmann & Fernandez S.L.**
**C/Alvarez de Baena, 4**
**28006 Madrid (ES)**

(56) References cited:
**WO-A2-2012/166059       AU-A1- 2004 202 419**
**GB-A- 2 429 100          US-A1- 2010 045 451**

Printed by Jouve, 75001 PARIS (FR)

**Description**

Field of the Invention

The invention relates to the field of speed detection of a vehicle, and more precisely, detecting a speeding condition, i.e., a travelling speed of the vehicle above a location-based imposed speed limit. Also, the invention relates to providing a warning or a control signal to a vehicle based upon the location and current travelling speed of the vehicle. The invention is directed towards providing a compliance system that determines whether, or not, a user actively complies with the warning that is generated, thereby ensuring that a user and vehicle are correctly adhering to the legally imposed speed limits.

Background of the Invention

The operation of a vehicle for transporting goods or humans is generally reliant on a user input. For example, a user may control the speed of the vehicle by operating a throttle control. In an automobile, this typically involves compressing a foot pedal to thereby increase the speed of the vehicle, or decompressing the foot pedal so as to decelerate the vehicle. Additional braking systems may also be provided so as to aid in the deceleration.

In such configurations, the user is given total control on the travelling speed of the vehicle. Generally, specific areas are provided for a vehicle to travel on, such as roadways for an automobile, for example. Several of the areas may have a speed limit imposed thereon such that a vehicle may be allowed to travel up to, but not beyond, such a speed limit. The imposed speed limits are provided in the interests of safety so as to restrict a user to a safe travelling speed for that particular travelling area.

However, due to the total control that is given to the user for determining the speed of the vehicle, these speed limits may, in fact, be broken. That is, a user of the vehicle may excessively operate the throttle of the vehicle to thereby increase the speed of the vehicle beyond the safe imposed speed limit. Indeed, in many situations, travelling above the imposed speed limit constitutes a criminal offence.

In many systems, particularly automobile based systems, warnings are provided for the user to be able to recognise or identify the imposed speed limit. For an automobile based system, these warnings are usually in the form of signs displayed at the roadside which indicate the imposed speed limit. However, in some situations, these warnings may be obscured either by additional traffic and/or the environment, i.e., overgrown bushes or hedges, for example. This results in the user either missing or simply not being able to detect the warning and thus identify the imposed speed limit. In other situations, the user of the vehicle may simply disregard the warnings and operate the vehicle at a desired speed that may be greater than the imposed speed limit.

Several methods have been employed in order to alert and/or punish the user for travelling over the imposed speed limit. A well known device that has been employed in the art is a speed camera. A speed camera is provided at the road side and measures the speed of an approaching vehicle. If the vehicle is travelling above a certain speed (not necessarily the speed limit but potentially a speed slightly higher than the speed limit) the camera is operated to take a photograph of the speeding vehicle. Alternatively, the camera may simply be used to send data, such as a vehicle's registration or the like, to a vehicle monitoring authority. The vehicle monitoring authority may include a traffic based management system or, more typically, a policing authority. On the basis of the sent information, the policing authority may issue certain punitive measures to punish the driver for excessive speeding.

The prior methods or systems typically activate after a speeding event has occurred, and do not alert the user in a real-time or a near real-time situation. That is, in the case of a speed camera, the user of the vehicle is punished after a speeding event is detected and thus the user is not alerted to the fact that the vehicle is travelling above the speed limit prior to being caught by the camera. This means that the user is potentially unaware of any wrongdoing before the camera activates and the user is punished. Additionally, the speed camera based system relies on speed cameras being positioned at the roadside, and thus the speed detection only occurs in the range of the camera. A system is required, therefore, to provide a warning that is easily detected by the user and, preferably, an adaptive system that may alert the user to excessive speeds at a variety of locations.

One such system is proposed in GB 2 429 100 A. A vehicle includes a device that is able to measure or detect a location of the vehicle. Typically this is by receiving a signal from a Global Positioning System (GPS) from a remote and currently employed system of GPS satellites. Two systems are contemplated; an onboard device based system and a remote server based system.

In the onboard device based system, the device is able to determine a speed of the vehicle, either instantaneously or over a period of time, i.e., an average speed, based upon the received GPS data. This speed is compared with map data including all routes and respective speed limits imposed thereon stored in the vehicle. If the determined speed of the vehicle exceeds the imposed speed limit, a signal is sent to a remote server. In contrast, in the remote server based system, GPS data received by the vehicle device is transmitted at regular intervals to the server. Therefore, the map data is stored at the remote server and a determination on whether, or not, the speed of the vehicle is larger than an imposed speed limit is made at the server. In both systems, a punitive measure, such as a speeding ticket, may be issued based upon the detected speeding condition.

In addition, the system of GB 2 429 100 A also optionally discloses providing a warning in a real, or near real-time, manner based upon a speeding condition. In this regard, if the vehicle device or the server detects that the vehicle's speed increases above the speed limit, a warning may be issued alerting the driver to such a fact. Other prior art may be found in WO2012/166059 or AU2004202419. However, the user of the vehicle may require certain excess speeds, for example, during an overtaking procedure or during travelling up hill. Equally, a user may receive a constant, and potentially off-putting, warning when the vehicle is travelling at excessive speeds. A user may also require an indication as to whether or not they are taking the correct action. To this end, on board speedometers that measure a vehicle's speed can, sometimes, be calibrated incorrectly, and thus a user may receive a warning but actually be travelling at or below the imposed speed limit according to the onboard speedometer.

It is therefore an object of the present invention to provide an adaptive warning system that can not only alert the user of a speeding condition, but also alert the user as to whether, or not, the user performs the correct action in response to such a warning.

Summary of the Invention

The present invention is as defined by the appended claims. It provides a system for warning a user of a vehicle if the vehicle is travelling above a location-based imposed speed limit, the system comprising; position providing means disposed in the vehicle and adapted to provide a location of the vehicle; determining means disposed in the vehicle or a remote server and adapted to determine the location-based imposed speed limit by comparing the location of the vehicle with a location database, the location database including location-based imposed speed limits for a plurality of locations; comparison means disposed in the vehicle or the remote server and adapted to compare the current speed of the vehicle with the location-based imposed speed limit provided by the determining means; signalling means provided In the vehicle and adapted to produce a control signal responsive to an output of the comparison means which indicates that a calculated or determined current speed of the vehicle exceeds the location-based imposed speed limit, the control signal adapted to at least one of generate a warning and automatically control the current speed of the vehicle; and compliance means provided in the vehicle or the remote server adapted to determine if the user or vehicle complies with the control signal, wherein the compliance means is adapted to determine a compliance to the control signal by monitoring a response of the vehicle, and, if the user or vehicle complies with the control signal, the signalling means is adapted to generate a compliance signal on the basis of an output from the compliance means.

A further embodiment also provides the compliance means adapted to change the control signal on the basis that the vehicle is determined to comply with the control signal.

A further embodiment also provides the signalling means adapted to produce a warning signal as the compliance signal indicating that the vehicle is complying with the control signal.

A further embodiment also provides the compliance means adapted to monitor the response to the control signal over a preset period of time, and, if the current speed of the vehicle is larger than the location based imposed speed limit after the predetermined period of time, generate a second control signal.

A further embodiment additionally provides the compliance means is adapted to determine if the location-based imposed speed limit is a stepped-down speed limit, and communicate with the signalling means to provide a specific urgent control signal if the location-based speed limit is a stepped-down speed limit and the vehicle exceeds the location-based imposed speed limit.

Yet a further embodiment also provides the compliance means adapted to monitor the deceleration of the vehicle, the deceleration being indicative of the response to the control signal, or the compliance means is adapted to monitor an actuation of a component of the vehicle, the component being user operated and able to affect the speed of the vehicle.

A further embodiment provides compliance means with an onboard storage for storing the location-based imposed speed limit and the current speed of the vehicle at a first time, and wherein the vehicle is provided with speed determining means for calculating or determining a second current speed of the vehicle at a second time, wherein the deceleration is determined by the compliance means on the basis of the difference between the second speed of the vehicle and the first speed of the vehicle and the difference between the second time and the first time.

The present invention also provides a method for warning a user of a vehicle if the vehicle is travelling above a location-based imposed speed limit, the method comprising; a detecting step for detecting a location of the vehicle; a determining step for determining the location-based imposed speed limit by comparing the location of the vehicle with a location information stored in a location database, the location information including location-based imposed speed limits for a plurality of locations; a comparing step for comparing a first current speed of the vehicle with the location-based imposed speed limit; a generating step for generating a control signal responsive to the result of the comparing step, the control signal indicates if the first current speed of the vehicle exceeds the location-based imposed speed limit, wherein the control signal is adapted to one of: generate a warning, automatically control the current speed of the vehicle, or a combination thereof; and a compliance step for monitoring a response of the vehicle to the control signal and for determining a compliance if the user or vehicle complies with the control signal, and, if the user or vehicle complies with the control signal, generating a compliance signal.

A further embodiment also includes providing a second current speed of the vehicle, such that the compliance step is performed by comparing the first current speed of the vehicle with the second current speed of the vehicle.

A further embodiment includes changing the control signal when the compliance to the control signal is detected.

A further embodiment also includes monitoring the response over a preset period of time and, after the preset period of time, the second current speed of the vehicle is compared with the location-based speed limit such that, if the second current speed of the vehicle is greater than the location-based imposed speed limit, a second control signal is generated, and if the second current speed of the vehicle is less than the location-based imposed speed limit, turning off the generation of the control signal, wherein the second control signal is adapted to one of: generate a second warning, automatically control the current speed of the vehicle, or a combination thereof.

A further embodiment provides the first current speed of the vehicle determined at a first time, and the second current speed of the vehicle determined at a second time, the second time at a later time than the first time. The compliance step includes comparing the first current speed of the vehicle and the second current speed of the vehicle in order to determine the compliance of the vehicle to the control signal, and if the difference between the first time and the second time is larger than the preset period of time, and, if the current speed of the vehicle is larger than the location-based imposed speed limit after the predetermined period of time, generating the second control signal.

A further embodiment also includes performing the compliance by monitoring the deceleration of the vehicle, the deceleration being indicative of the response to the control signal, or by monitoring the user's interaction with a component of the vehicle that is adapted to control the speed of the vehicle.

A further embodiment further includes a storing step for storing the location-based statutory speed limit and the first current speed of the vehicle at a first time, calculating or determining the second current speed of the vehicle at a second time, and wherein the deceleration on the basis of the difference between the second speed of the vehicle and the first speed of the vehicle and the difference between the second time and the first time.

Brief description of the Drawings

A better understanding of the features and advantages of the present invention will be obtained by reference to the following detailed description that sets forth illustrative embodiments by way of example only, in which the principles of the invention are utilised, and the accompanying drawings of which:

Figure 1 shows a simplistic overview of the basic elements used in a system for detecting whether, or not, a vehicle is travelling at a speed greater than a location-based imposed speed limit.

Figure 2 shows a more detailed view of the basic elements shown in Fig. 1.

Figure 3a shows one possible configuration of the elements shown in Fig. 2.

Figure 3b shows an alternative configuration of the elements shown in Fig. 2.

Figure 4 shows an exemplary determination method for determining a speeding condition and a compliance to a generated warning signal.

Figure 5a shows an exemplary configuration of the compliance means.

Figure 5b shows a further exemplary configuration of the compliance means.

Figure 6 shows an exemplary method for using the compliance means of Fig. 5a and 5b.

Figure 7 shows an exemplary speed vs. time graph to explain several exemplary algorithms used to determine a user or vehicle compliance.

Figure 8 shows a time an exemplary speed vs. time graph to explain the determination of a region where no compliance is necessary.

Figure 9 shows a method for implementing a bypass system for bypassing the generation of a control or compliance signal.

Detail Description of the Invention

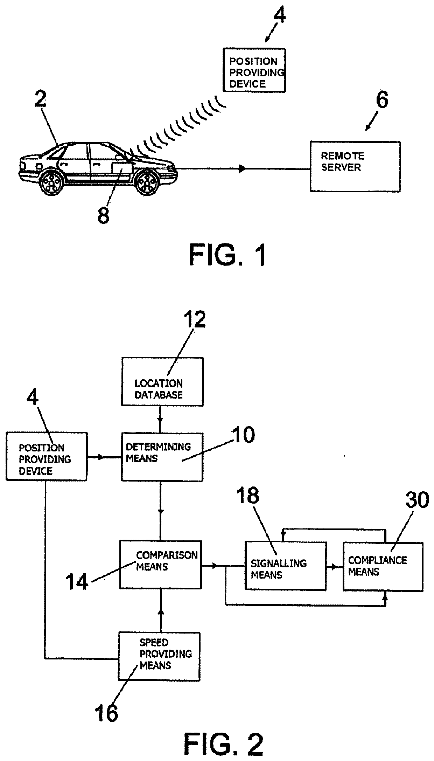

The basic concept of the invention is described with regards to Fig. 1 and Fig. 2. Fig. 1 shows an implemented system with regards to the devices used, whilst Fig. 2 shows a block diagram approach to the various components used.

Fig. 1 shows a vehicle 2, a position providing device 4, and a remote server 6. The position providing device 4 is generally located externally to the vehicle 2 and provides position data indicative of a position or location of the vehicle 2 to the vehicle 2. In a preferred configuration, the position providing device 4 is a GPS satellite that provides a GPS signal to the vehicle 2. A GPS signal includes the position data, i.e., spatial coordinates, as well as time data indicating a synchronised time. The position providing device 4 may be any position providing device 4 and is not just limited to a satellite based system. Indeed, the position providing device 4 simply provides an accurate or approximate location of the vehicle 2, and any such device achieving the same is considered herein. For example, the position providing device 4 may, in fact, be located in or on the vehicle 2. The position providing device 4 may be adapted to continually provide position data or to provide data intermittently, i.e., once per millisecond.

The vehicle 2 is provided with an onboard device 8. The onboard device 8 may be a separate component or may be integrally formed with the vehicle 2 and, for example, supplied with the vehicle 2. Such an onboard device 8 may be integrally formed with a navigation system of a vehicle 2, for example. The onboard device 8 is adapted to receive a signal from the position providing device 4 indicative of the position of the vehicle 2. In a preferred embodiment, the signal from the position providing device 4 is a GPS signal.

As discussed in more detail below, the onboard device 8 is able to communicate with the remote server 6. The remote server 6 may be located at any location; the remote server 6 may be located at a large distance to the vehicle 2, i.e., a telephony network transceiver, or the remote server 6 may be reasonably close to the vehicle 2, e.g., positioned on sign posts of an existing roadway. This communication may be only one-directional but is preferably bi-directional, such that the remote server 6 may also communicate with the onboard device 8. Any form of communication may be used. For example, the communication could be via wireless internet, or via an existing telephony network. The details of the communication type and method are not discussed herein, and it should be appreciated that any suitable communication system may be used.

However, given Fig. 1, it is clear that a signal is to be sent from the onboard device 8 to the remote server 6, or vice versa. In this case, the signal may be identified in any conceivable way, but preferably, the signal is encoded using a unique code to each onboard device 8. For instance, the onboard device 8 may be programmed according a unique code, such as the vehicle's registration or the like. In this example, the signal sent from the onboard device may be coded to the unique code and transmitted to the remote server 6. The remote server 6 may be able to determine the unique code and code any signals to be sent back to the onboard device 8 using the unique code. Primarily, this may be employed to reduce interference between signals from other vehicles 2 and to ensure that the correct signal is received. Any interference reducing technique may be employed, for example frequency multiplexing or the like. Indeed, when using a telephony network, any transmission from the onboard device 8 may simply be accommodated by the existing scheduling or interference-reducing technique employed by the telephony network.

A further system may utilise the use of a toll collection system that is designed to communicate with a toll collection authority when the vehicle 2 is passing through an area where a certain toll is enforced. In this regard, the toll collection system may communicate with a toll collection network, which may be a widespread network or may be a more locally based network, i.e., only present in a specific stretch of road. In any case, the toll collection system is registered to a particular user or vehicle 2, and thus securely communicates with the toll collection network. Typically, the toll collection system is a separate component that is fixed to the vehicle 2, but such a component may be integrally formed with other vehicles 2. The onboard device 8 of the present invention may be integrally provided with the toll collection system and may utilise or "piggyback" with the communication system of the toll collection system.

The remote server 6 is adapted to process the signal transmitted from the onboard device 8. The processing is described in more detail below, but essentially the remote server 6 issues a warning to the vehicle 2 if a location-based imposed speed limit is exceeded. The remote server 6 may also be linked to an authority system 20 such that, when the speed of the vehicle 2 is detected to be in excess of the imposed speed limit, the remote server 6 sends a signal alerting the authorities, such as the police force.

Fig. 2 shows a functional arrangement of a system for detecting whether, or not, a vehicle is travelling at a speed greater than a location-based imposed speed limit. Fig. 2 shows determining means 10 which is provided to determine a location-based imposed speed limit. The determining means 10 performs such a task on the basis of the information provided by the position providing device 4 and by location database 12. The location database 12 is essentially a database or a list of locations with assigned speed limits. That is, the location database 12 may comprise a series of position coordinates, wherein each coordinate is assigned a speed limit. Additionally, or alternatively, the location database 12 may comprise a range of coordinates that define a certain speed limit or certain "area" where the speed limit is imposed. In this case, coordinate information from the position providing device 4 may be determined to be in a range of two coordinate locations identifying a speed limit. The location database 12 may include a complete "map" of data for the entire transport network, or may only include a part thereof; that is, the location database 12 is altered based on the location of the vehicle 2 or remote server 6.

In essence, the location database 12 is not limited to containing government enforced speed limit data, and may include advisory speed suggestions or the like. For example, a stretch of roadway including a known area prone to accidents (an accident black spot) may be supplied with an advisory speed suggestion. That is, the location coordinates of this black spot may be provided with an advisory speed that is lower than the actual imposed speed limit. Equally, some areas may be provided with a speed suggestion that is higher than the imposed speed limit. For example, a stretch of road prior to a steep hill may require small vehicles or heavy goods vehicles to accelerate to a speed beyond the imposed speed limit so as to be able to reach the top of the hill. For ease of reading, the imposed speed limit will be discussed herein with reference to the actual government imposed speed limit, but it is noted that the imposed speed limit may be an advisory speed limit or suggestion. The location database may also be updated to include changes in the location-based imposed speed limits, or to include temporary changes to the location-based imposed speed limits that are temporarily enforced. Such temporary speed limits are often enforced in areas that are experiencing engineering works or the like.

The determining means 10 is thus able to determine an imposed speed limit from the location database 12 and position providing device 4. This imposed speed limit is then provided to comparison means 14, wherein a comparison between the imposed speed limit and a current speed of the vehicle 2 is performed. The current speed of the vehicle 2 may be provided by speed providing means 16 or the current speed of the vehicle 2 may be determined via comparison of the position data or location including an associated time. That is, the speed providing means 16 may be a speedometer or the like and may provide the comparison means 14 with a speed based on the rotation of the wheels of the vehicle 2 or the rotation of the engine. Alternatively, or additionally, the speed providing means 16 may provide a current speed of the vehicle based upon comparing two or more instances of received GPS data. The speed providing means 16 may also be integrally formed with the comparison means 14.

Accordingly, the comparison means 14 compares the current speed of the vehicle 2 with the determined location-based imposed speed limit. The comparison can, in the most basic form, provide two results, although a system providing two or more results is also contemplated below. The comparison means 14 may determine that the current speed of the vehicle 2 is either equal to or smaller than the location-based imposed speed limit, or that the current speed of the Vehicle 2 is greater than the location-based imposed speed limit. Alternatively, the comparison means 14 may determine that the current speed of the vehicle 2 is either smaller than the location-based imposed speed limit, or that the current speed of the vehicle 2 is equal to or greater than the location-based imposed speed limit.

As an example, if the current speed of the vehicle 2 is determined to be lower than or equal to the location-based imposed speed limit, then a determination that the vehicle 2 is travelling within the safe and legal speed limit is made and the next instance of position data is analysed. If, on the other hand, the current speed of the vehicle 2 is determined to be larger than the location-based imposed speed limit, then the comparison means 14 may send a signal to signalling means 18 in order to activate the signalling means 18. The signalling means 18 may generate a control signal, wherein the control signal may activate at least one of a warning and a vehicle control.

The warning is typically an indication to the user of the vehicle 2 that the current speed of the vehicle 2 is larger than the location-based imposed speed limit. This warning may include any type of warning, but is preferentially a visual or audio based warning, or combination thereof. For example, the visual warning may be a light emitting component configured to illuminate when receiving a signal from the signalling means 18, or a buzzer or amplifier configured to sound when receiving a signal from the signalling means 18.

To this end, a display means may also be provided to display the visual warning. This could include a head-up-display (HUD) or similar, which is adapted to illuminate a part of the windscreen of the vehicle 2, for example. In this regard, the HUD may be adapted to display a text-based warning in addition to, or alternatively to, a symbol or picture based warning. In this configuration, a warning is displayed on the windscreen of the vehicle 2 such that the user may observe the warning whilst also being able to observe the roadway directly ahead of the vehicle 2. HUDs are well known in the art, and a detailed discussion thereof is omitted.

Additionally, or alternatively, the signalling means 18 may activate a vehicle control in response to the signal from the comparison means 14. In this regard, a vehicle control signal is generated and provided so as to control the vehicle 2. For instance, for an automobile, the vehicle control signal may be a signal that can operate the engine management system of the automobile and thereby place a restriction on the output of the automobile limiting the current speed accordingly. The vehicle control signal may not necessarily control the engine or motor of a vehicle 2, but may be additionally or alternatively linked to a braking system of the vehicle 2 or the like. In some arrangements the warning may be a warning indicating that the vehicle control signal is in use, i.e., limiting the current speed of the vehicle 2. A warning such as "The vehicle is now limited to..." may be employed, for example.

An arrangement is also considered whereby the comparison means 14 is adapted to compare several values for each location or position. That is, the location-based imposed speed limit is simply one value, and a second (or subsequent) value may also be provided. In this case, the location-based imposed speed limit is determined to be a first threshold and the second value is determined to be a second threshold. For instance, the location-based imposed speed limit may be 50 kph for a specific location. The second threshold may be larger than this value, 55 kph, for example. Thus, the comparison means 14 is adapted to compare the current speed of the vehicle 2 with one or more of the thresholds and produce a corresponding signal to be sent to the signalling means 18.

For example, a vehicle 2 travelling at 53 kph is travelling over the first threshold but below the second threshold. In this case, a first control signal may be generated by the signalling means 18 indicating that the vehicle 2 should slow down, e.g., a cautionary warning. If, however, a vehicle is travelling at 57 kph, the comparison means 14 determines that the vehicle 2 is travelling above the second threshold and thus enables the signalling means 18 to generate a second control signal. The second control signal may be an additional warning, such as a message or an alarm or the like. Equally, the second control signal may inform the user that the vehicle 2 is being monitored by the authorities or that a punitive measure has been issued as a result of the user not complying with the first control signal. Equally, instead of (or in addition to) the second control signal, the vehicle control signal may be issued when the vehicle 2 is travelling over the second threshold. Any of the previously discussed warnings and vehicle control signals may constitute the first and second control signals.

In essence, a graded control signal system may be employed such that a number of various control signals, including various warnings and/or various vehicle control signals, are provided. Also, any number of thresholds may be utilised depending upon the specific configuration of the system or location of the vehicle 2. In this regard, the thresholds may be stored in conjunction with the location coordinates stored in the location database 12, or the thresholds may be calculated from the location-based imposed speed limit. For example, the second threshold may be a certain percentage, such as 110%, of the location-based imposed speed limit. Typically, the second threshold will be greater than the location-based imposed speed limit or first threshold. However, this need not be the case and, in fact, the second or first threshold may be lower than the location-based imposed speed limit - as described in conjunction with the accident black spots above.

When the control signal is generated, it is supplied to the corresponding components of the vehicle 2. The warning may be designed to initiate a response from the user of the vehicle 2, whereas the vehicle control signal may be designed to automatically initiate a response to slow down the vehicle 2. In the case of the warning, the user has two possible reactions. Either the user operates the throttle control in a negative manner, i.e., decreasing the throttle position, or the user operates the braking system of the vehicle 2.

Furthermore, the system may be configured to provide a predictive or pre-warning system. A first example may be to generate a warning, as the control signal, based upon a change in the location-based imposed speed limit - that is, when the location-based imposed speed limit increases or decreases. This may be performed by monitoring the location and possible directions of the vehicle 2 based on the position data. Thus, the signalling means 18 may be adapted to provide a changing speed limit warning to alert the user that a different imposed speed limit will be enforced in the next stretch of road.

In addition, several imposed speed limits may only be temporarily imposed, as discussed above. In some situations, these imposed speed limits may include a stepped-down limit, whereby the limit is reduced in a stepped-down fashion from a certain speed to a safe limit. In some instances, these are employed in areas that are undergoing maintenance. Such stepped-down speed limits employ a stepped down change on the basis of distance. That is, a speed limit may be imposed at a first distance, a second limit at another distance (500m for example) and a third limit at further distance (300m for example). For each step-down speed limit, the changes in the speed limit typically occur after the same step-down distance, and thus a system is contemplated that can provided the imposed speed limit in a sequential manner based upon the initial detection of the speed limit. That is, the control signal is generated at the first distance, and after the second distance (500m), the imposed speed limit is automatically stepped down, regardless of a signal from the remote server 6. In this case, the vehicle 2 may be provided with an onboard memory, in the onboard device 8 for example, that is adapted to store the imposed speed limit and the indication that the speed limit is a stepped down speed limit. The onboard device 8 may then be programmed with the corresponding algorithm to calculate the issuance of the various control signals depending upon the current speed of the vehicle 2.

Alternatively, or additionally, a predictive acceleration system may be employed. In this case, the system may monitor the acceleration of the vehicle 2 and issue a control signal before the vehicle 2 exceeds the location-based imposed speed limit. For example, this may be useful should a vehicle 2 be accelerating at a larger than normal rate and, based on a certain algorithm, it is determined that, after a preset period of time at the same acceleration, the vehicle 2 will exceed the imposed speed limit. A warning indicating a concern such as "Watch your speed" or "The speed limit is..." may be issued, for example, thereby alerting the user to check their speed and potentially alter their acceleration. A predictive location system may also be employed that includes issuing the control signal before the actual imposed speed limit is present. For example, the control signal may be issued 100 metres from a change in speed limit, such that the user may slow the vehicle 2 down. The second or more sever control signal may be generated, if applicable, upon entering the area with the new imposed speed limit.

In some situations, the speed of a location is not restricted, and thus has no location-based imposed speed limit. In these cases, the operator or programmer of the location database 12 may select a value that is unobtainable, i.e., a value for the speed limit that is too large for a vehicle 2 to obtain. In this way, the speed "limit" may not be broken easily and thus, the generation of the control signal may not be performed. Equally, the system of the present invention may have an inbuilt system to ignore a certain value. For example, an imposed speed limit may be set to a value including a decimal place, such as 25.5 kph - these speed limits are not present. Thus, the comparison means 14 always issues a signal indicating that the user is travelling at a safe speed, regardless of the actual speed of the vehicle 2.

As an alternative, or in addition, to generating a signal to activate the signalling means 18, the comparison means 14 may send a signal indicating the result of the comparison to the authority system 20. The authority system 20 may then act upon the data accordingly. For instance, the authority system 20 may decide to issue the user with a fine or punitive measure depending upon the severity of the speeding condition, i.e., the difference between the current speed of the vehicle 2 and the location-based imposed speed limit. Alternatively, the authority system 20 may simply issue an educational message if the difference in speed is low, whereby the educational message is intended to inform and educate the user of the imposed speed limit or previous instances where the user has exceeded the imposed speed limit. This may be done via issuance of a letter in the post, or via communicating with a communication device of the user; for example, issuing an SMS message or email to a device of the user. Providing this link allows the authorities, such as the police, to monitor the speed of vehicles 2 without actually being present at the road side.

In some cases, the onboard device 8 is registered to a particular user. In addition, the onboard device 8 may include identification means, such as finger print recognition, to identify the user of the vehicle 2. A system may also be employed that checks the user's identity before every journey, or in every vehicle 2, such that, even if the user is operating a different vehicle 2, the authorities may monitor that particular user.

To this end, the authority system 20 may be linked to, or include its own, storage means 22. The storage means 22 may be adapted to store data relating to the vehicle 2. The storage means 22 may store all the data for a vehicle 2, i.e., all the locations of the vehicle 2 and speeds at those locations, or the storage means 22 may store only instances of speeding. A log of the vehicle's speed may then be provided which may be useful in several ways. The log may be used in legal proceedings, for example as evidence that the vehicle 2 was speeding at a certain location, or that the user is known to frequently speed. Alternatively, the log may be used to indicate "good" behaviour of the user, i.e., travelling below the location-based imposed speed limit. This may be issued in the form of a regular letter or statistical information - for example, every two weeks or monthly etc. The letter or statistical information, such as a graph, may include a rating system to indicate how well the user of the vehicle 2 has maintained a legal speed when operating the vehicle 2. Indeed, the user of the vehicle 2 may be provided with a unique code or password to enable the user to view the data in the storage means 22 via the internet or the like, such that the user may monitor their own driving records. Alternatively, or in addition, the log may be supplied to insurance companies or the like, such that insurance premiums may be calculated based upon the logged information.

The arrangement shown in Fig. 2 also displays a compliance means 30. The compliance means 30 is discussed in more detail below, but it is an aspect of the present invention to provide compliance means 30 that may detect whether, or not, a user complies with the control signal generated, and in some further embodiments, the degree to which the user complies. The compliance means 30 may be located either in the remote server 6, but preferably, in the vehicle 2.

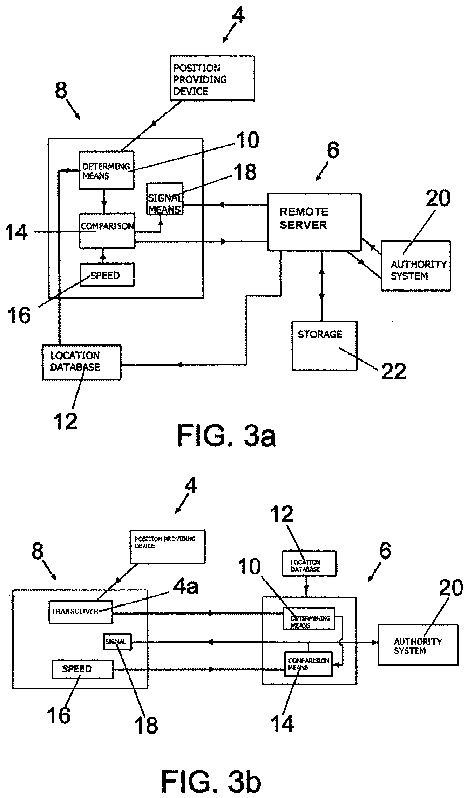

Two exemplary arrangements of the various means and components discussed above are given with regards to Figs. 3a and 3b. Fig. 3a displays the majority of the components in the onboard device 8, which is located in the vehicle 2. Specifically, the onboard device 8, in this arrangement, includes the determining means 10, comparison means 14, speed determining means 16, and signalling means 18. The onboard device 8 may optionally include the position providing device 4, although this is preferably a GPS satellite (external to the vehicle 2) that provides the location information directly to the determining means 10. The speed determining means 16 may be provided as a speedometer or may be means to calculate the current speed of the vehicle 2 based on the position data, as discussed above.

The location database 12 may be provided either internally to the onboard device 8, or externally thereto and sent to the onboard device 8, and more specifically, to the determining means 10. The location database 12 may be stored in the remote server 6, for example, or in a memory of the onboard device 8. In this regard, the location database 12 that is sent to the onboard device 8 may only be a part of the overall location database 12. That is, the location database 12 stored in the remote server 6 is a complete "map" of data, whereas the segment sent to the onboard device 8 may be the data within a certain radius of the vehicle 2, for example, 10 km. In this case, the location database 12 stored in the vehicle 2 may be continually updated or may be updated based upon a certain distance determined by the difference between the position data. For example, the updating may occur after every 5 km. This enables easy updating of the location database 12, and reduces the memory demands of the onboard device 8.

In the arrangement in Fig. 3a, the determining means 10 determines a location-based imposed speed limit, based upon received position data, which is then sent to the comparison means 14. As discussed above, the location database 12 may be stored in the vehicle 2 or onboard device 8, or a request may be sent to the remote server 6 to supply the location database 12 to the vehicle 2 - for example, when the vehicle 2 is turned on and the engine started. The comparison means 14 then determines the condition of speeding or not speeding based on the current speed of the vehicle provided by the speed providing means 16.

If the vehicle 2 is speeding (the current speed of the vehicle is larger than the location-based imposed speed limit), one of two situations may occur. A signal may be sent from the comparison means 14 to both the signalling means 18 and the remote server 6, wherein the signalling means 18 generates the control signal and the remote server 6 stores or monitors the speed of the vehicle 2 (which may then be relayed to the authority system 20). Alternatively, the comparison means 14 sends a signal to the remote server 6, wherein the remote server 6 determines whether, or not, a control signal is necessary, i.e., what type of warning to issue, for example. A signal is then sent from the remote server 6 to the signalling means 18 that then generates the corresponding control signal.

In this arrangement, the communication between the comparison means 14 and the remote server 6 may be continuous or intermittent. That is, the comparison means 14 may send the result of every comparison (equal to the number of position data packets received, or number of location coordinates) to the remote server 6, even if the vehicle 2 is within the location-based imposed speed limit. Alternatively, the comparison means 14 may only communicate with the remote server when the current speed of the vehicle 2 is greater than the location-based imposed speed limit. It should be noted that, primarily, the processing of data is performed in the onboard device 8 in this arrangement.

In contrast, Fig. 3b shows an arrangement whereby the processing is performed primarily in the remote server 6. In this arrangement, the onboard device 8 comprises the signalling means 18 and either the position providing device 4 or a transceiver 4a, depending upon the exact nature of the position providing device 4. In this regard, for a GPS satellite as the position providing device 4 positioned externally to the vehicle 2, the transceiver 4a is provided to receive the GPS signal, and transmit the position data from said GPS signal to the remote server 6, and more particularly, to the determining means 10. In this regard, the transceiver 4a may also be adapted to encode or schedule the data to be sent to the determining means 10. As with the arrangements described above, the speed determining means 16 may be provided either on the vehicle 2 or at the remote server 6, depending upon the chosen method for determining the current speed of the vehicle 2. The remote server 6 includes, in this configuration, the determining means 10 and the comparison means 14. The location database 12 is either part of the remote server 6 or supplied thereto.

Operation of this system is similar to that of Fig. 3a. A signal is transmitted from the onboard device 8 indicative of the position of the vehicle 2, and optionally a signal indicative of the current speed of the vehicle 2. The determining means 10 receives the position data and determines a position based upon the information of the location database 12. A signal is sent to the comparison means 14 which compares the imposed speed limit and current speed limit of the vehicle 2. As with Fig. 3a, a signal based on the comparison is sent to the authority system 20 and, potentially, the signalling means 18. In this configuration, it is noted that the position providing means 4 and transceiver 4a must supply the position information almost continuously to the remote server 6.

In both arrangements, signalling means 18 may be separate from the onboard device 8 or may be provided as an integrally formed component therewith. This could be dependent upon the vehicle 2 that the system is provided in. For example, an automobile could have one onboard device 8 containing the signalling means 18, whereas a motorcycle could employ a separate signalling means 18 that may be, for example, disposed in the rider's helmet and display a HUD on the visor of the helmet.

Effectively, the control signal enables a user of a vehicle 2 to respond to the current speed of the vehicle 2 exceeding a location-based imposed speed limit, such that, ideally, the user responds prior to any punitive measures being necessary. Additionally, such a system enables the user to have no knowledge of the imposed speed limit for that stretch of road, as the user is able to determine the speed limit based upon the generation of the control signal, i.e., the warning and/or vehicle control signal. Furthermore, such a system enables the user to perform no action in order to find out the location-based imposed speed limit aside from driving. That is, an interaction with a satellite navigation system or other system of the vehicle 2 is not required.

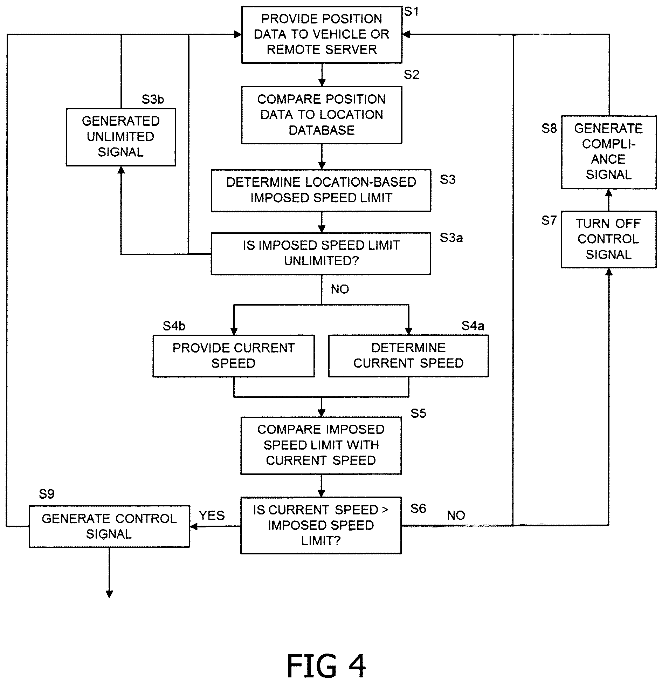

Fig. 4 shows an exemplary flow chart for describing the method of using the basic components discussed above; that is, for determining when a vehicle 2 exceeds the location-based imposed speed limit. The method may be used for either of the configurations discussed above with regards to Figs. 3a and 3b. The process starts by providing a position data element to the vehicle 2 or remote server 6 from the position providing device 4 or transceiver 4a at step S1. The position data is then compared to the location database 12, step S2, and a location-based imposed speed limit found from the comparison, step S3.

In some situations, as discussed above, there may be no imposed speed limit for a specific location; that is, the stretch of road is unlimited with regards to the maximum speed that the vehicle 2 may travel. As discussed above, the location database 12 may include a speed limit for that location that is too high, i.e., an unobtainable speed limit. Alternatively, the speed limit may be set to a specific unused speed limit which may indicate to the comparison means 14 that the speed is unlimited. For example, the element received from the location database 12 may be a code, such as "123456", which the comparison means 14 reads as an unlimited section of road/location.

In this regards, the method may be provided with an optional step of determining if the imposed speed limit is unlimited, step S3a. If the speed limit is unlimited (YES at S3a), the signalling means 18 may be sent a signal from the comparison means 14 indicating that the speed limit is unlimited, whereby the signalling means 18 may generate a control signal indicating the same, e.g., a visual warning indicating to the user that the stretch of road is unlimited. Here, the method returns to step S1 where the next data element is processed, until an imposed speed limit that is not unlimited is detected. If, however, the system is to be used where an unlimited road does not exist, the method may simply move from step S3 to S4a or S4b.

Next, the current speed of the vehicle 2 is either determined based upon the position data, step S4a, or provided via a separate means, step S4b. For example, the speed detection means 16 may calculate the current speed of the vehicle 2 based on a speedometer reading, as discussed above. The location-based imposed speed limit is then compared with the current speed of the vehicle 2, step S5, and a comparison, step S6, is performed in the comparison means 14. If the outcome of the comparison is NO (the current speed is smaller than the imposed speed limit) then the process either returns to step S1 and processes the next position data element, or moves to step S7. At step S7, if a control signal is currently generated or being generated by the signalling means 18, then the subsequent generation is turned off. That is, the control signal is no longer generated. Optionally, a compliance signal may be generated, step S8, by the compliance means 30 to indicate that the vehicle is travelling below the imposed speed limit. The compliance signal is discussed in more detail below.

If, in contrast, the outcome of the comparison is YES (the current speed is larger than the imposed speed limit) then the process moves to step S9. At step S9, the control signal may be generated by the signalling means 18. The control signal then performs or enables the corresponding action to be taken by the vehicle 2 or user; that is, at least one of the warning and vehicle control signal is generated. The method described with regards to Fig. 4 details a system that provides a control signal to indicate that the vehicle 2 is travelling above a predetermined location-based imposed speed limit, and generates a control signal counteracting such accordingly.

An aspect of the present invention is also to provide compliance means 30 which is adapted to monitor the response of the vehicle 2 when the control signal is supplied to the vehicle 2. This enables the user of the vehicle 2 to identify whether, or not, they are undertaking the correct action, or rather enough of the correct action, to sufficiently correct the current speed of the vehicle 2. For example, a vehicle travelling at 35 kph in a 30 kph imposed speed limit location is issued with a warning, and a user slows the vehicle down to 31 kph. Whilst still over the imposed speed limit, the current speed of the vehicle 2 is much safer than the previous speed, i.e., 35 kph. The compliance means 30 essentially measures the user's response to the control signal, and may issue further warnings, vehicle control signals, or positive messages depending upon the response.

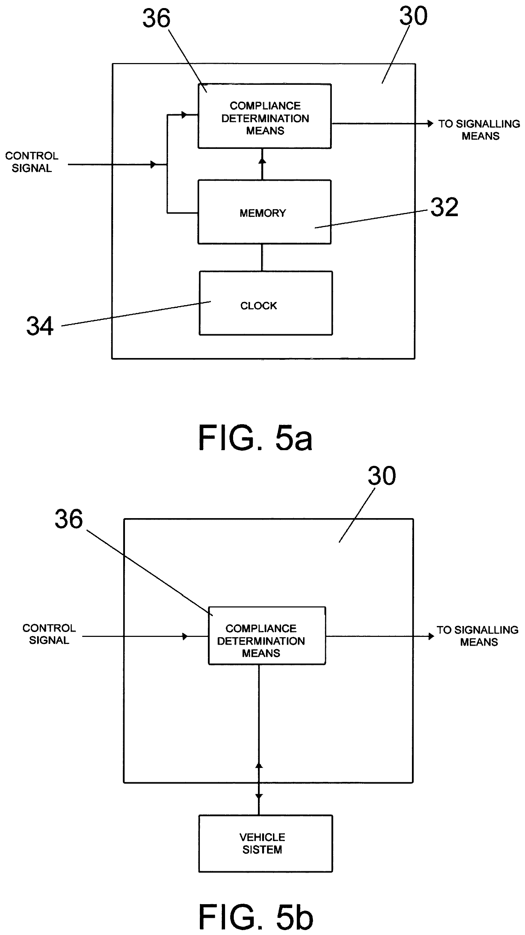

Figs. 5a and 5b show two possible examples of the compliance means 30. Fig. 5a shows the exemplary compliance means 30 including a memory 32, an optional clock 34, and compliance determination means 36. The device of Fig. 5a is adapted to measure a deceleration of the vehicle 2 in response to the control signal, or the user's response to the control signal. In contrast, Fig. 5b shows the compliance means 30 including only the compliance detection means 36, wherein the compliance detection means 36 is connected or linked to one or more systems of the vehicle, such as a braking or engine management system. The compliance means 30 of Fig. 5b is adapted to measure the user's response directly, as opposed to the deceleration of the vehicle 2.

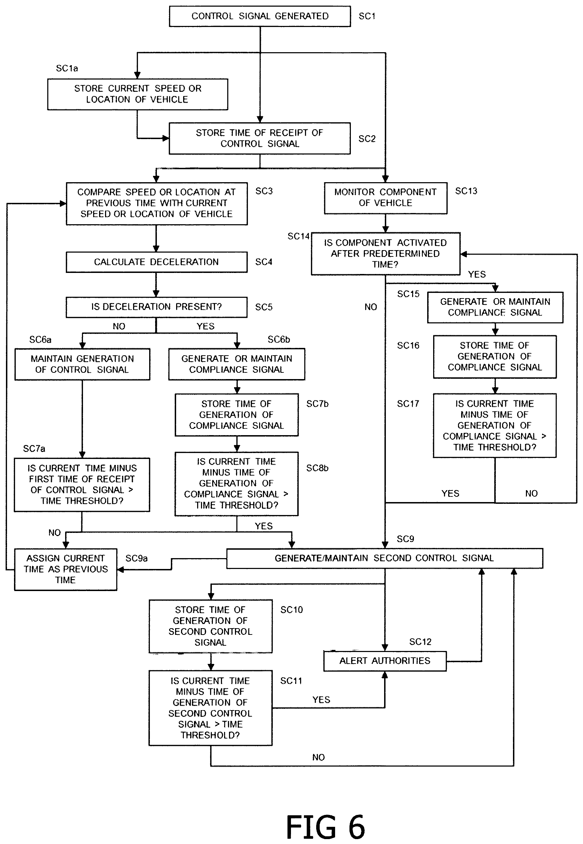

Fig. 6 shows a series of method steps utilising one of the compliance means 30 discussed above. The method of Fig. 6 starts from step S9 of Fig. 4 when the control signal is generated. That is, in this exemplary case, the compliance means 30 is activated only when the control signal is generated after a vehicle 2 exceeds the location-based imposed speed limit. Alternatively, a system is contemplated that generates or determines compliance to the location-based speed limit, not just the user's response to a control signal. That is, a system may provide a positive indication that the vehicle 2 is travelling below the imposed speed limit, such as an illuminated green LED, for example.

Typically, the control signal is generated at step SC1, and is sent from the signalling means 18 to the compliance means 30, in addition to being sent to the various indicators (buzzer display, engine management system etc.). The control signal is received by the compliance means 30, wherein the compliance means 30 may store a time of receipt of the control signal, step SC2, via use of the clock 34. Additionally, the compliance means 30 may store a current location or current speed of the vehicle 2 when receiving the control signal, step SC1a. In this regard, the compliance means 30 may be linked, either directly or indirectly, to the determining means 10, position providing means 4, or speed determining means 16, depending upon what information is required.

As shown in Fig. 6, the method splits depending upon which configuration is used for the compliance means 30. Considering the device of Fig. 5a, the method proceeds to step SC3. At step SC3 the stored location or current speed of the vehicle 2 Is compared with a previously stored location or speed. In this regard, the device of Fig. 5a includes both steps SC1a and SC2. Effectively, two times are stored, a current time and a previous time, and two speeds or locations at these times are stored. The reason for providing the locations is such that a speed may be calculated, should the speed not be provided. If no previous time or speed/location is assigned, a value of zero for both may be pre-programmed into the compliance means 30, or memory 32 thereof.

As a result of step SC3, a deceleration is calculated at step, SC4. Any well known formula may be used to calculate the deceleration, using any number of time and speed/location data elements. One example discussed herein may use a basic formula for calculating the deceleration; for example, one method for calculating the deceleration may be to calculate the difference in speed at the two successive times and divide by the difference in times. Mathematically,

$$a = \Delta s/\Delta t = (s(T_n)-s(T_{n+1}))/(T_n-T_{n+1}),$$

wherein $a$ is the acceleration, $s(t)$ is the speed at time $t$, $T_n$ is the n-th time, $\Delta s$ is the change in speed, and $\Delta t$ is the difference in time.

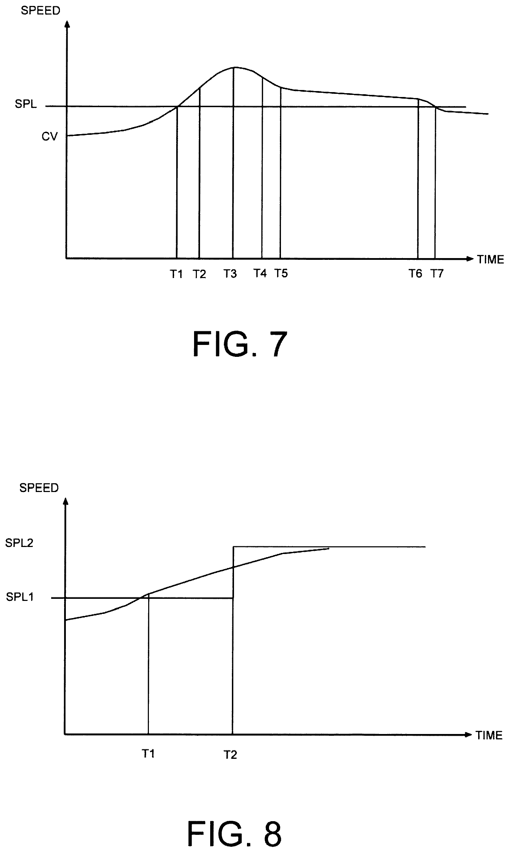

In this instance, the acceleration may be compared between the speeds at various times, as is explained with reference to Fig. 7. Fig. 7 shows a time verses speed graph and an exemplary curve CV of the current speed of the vehicle 2. Also shown is a location-based imposed speed limit, indicated by the line SPL. The position providing means 4 may be adapted to provide position data at a certain fixed-time interval ti, for example. Equally, the time interval could be equal to the information provided by the comparison means 14, which may not be equal to the time interval of the position providing device 4 - this may be one signal from the comparison means 14 for every two position data elements from the position providing device 4. A first time T1 is indicated on the graph. Prior to the time T1, the current speed of the vehicle 2 is lower than the location-based imposed speed limit. In this case, the remote server 6 may be receiving and/or storing data compared with the location-based imposed speed limit, as discussed above.

At T1, the current speed of the vehicle 2 is equal to or slightly greater than the location-based imposed speed limit. At this time, a control signal is generated by the signalling means 18. At a later time, T2, Fig. 7 shows that the current speed of the vehicle 2 is still increasing. In this case, step SC5 determines that no deceleration is present; that is, the equation above results in a positive quantity indicating acceleration - deceleration is indicated by a negative quantity.

As the current speed at T2 is larger than the speed at T1, the control signal continues to be maintained or generated, step SC6a.

As a further, optional, method step, the time for which the control signal is generated or maintained may also be monitored. In this situation, an initial time for which the control signal is generated may be stored, and the current time is compared with this initial time. Referring to Fig. 7, the initial time would be indicated by T1. A difference in time is calculated, i.e., a generic time T minus T1, and the difference is compared to a time threshold, step SC7a. The time threshold is a predefined time that may be set for all imposed speed limits, or vary depending upon the value of the imposed speed limit. The time threshold indicates a time for which the user or vehicle 2 should respond to the control signal.

If the time difference is less than the time threshold, then the current time is assigned as the previous time (and current speed/location associated therewith is assigned as the previous speed/location) at step SC9a. The previous time is then returned and used in step SC3 to compare with the current speed/location and time. Equally, the method may move from step SC6a to SC9a without passing through step SC7a. If the determination at SC7a is positive (the time difference is larger than the time threshold), then a second control signal may be generated at step SC9. The second control signal may be any of the control signals as discussed above.

In contrast, at step SC5, the determination of deceleration may be present (i.e., a YES determination), and the method passes to step SC6b. At step SC6b, a compliance signal is generated or maintained, depending upon whether or not the compliance signal is currently being generated. The compliance signal may be generated by the compliance means 30 in addition to, or alternatively to, the control signal, and may be any kind of signal generated by the signalling means 18 discussed above. Indeed, the compliance means 30 may even be linked to the signalling means 18, and thus simply utilise the indicators (display or buzzer) of the signalling means 18 to provide the compliance signal. Preferably, the compliance signal is generated by the signalling means 18 on the basis of a signal from the compliance means. Alternatively, the compliance means 30 may have its own variety of indicators.

Equally, the compliance signal may provide a signal that overrides the control signal entirely, such that the user is presented with a positive indication that they are performing the correct action despite still being above the location-based imposed speed limit (see time T4 of Fig. 7, for example, explained below); that is, no control signal is provided despite the current speed being larger than the imposed speed limit.

Regarding the control signal as a vehicle control signal, ideally the vehicle control signal reduces the speed of the vehicle 2 when received, at least, the location-based imposed speed limit. However, some situations may result in the vehicle control signal not being received or the vehicle control signal not being programmed correctly so as to reduce the vehicle's speed sufficiently. Hence, the compliance means 30 acts as a fail-safe mechanism for the vehicle control signal; that is, to identify if the vehicle control signal is acting correctly.

Regarding Fig. 7, the period from T3 to T4 shows a first level of deceleration - thus a compliance signal is produced at time T4. This time may optionally be stored, SC7b, and a similar comparison to a time threshold discussed above is made with regards to the compliance signal. That is a time difference between a current time and the time at which the compliance signal was generated (T4) is calculated and compared to a time threshold. The time threshold is a time that the user should reduce the speed of the vehicle 2 to below the imposed speed limit. In this regard, the compliance signal is generated all the time that the user is responding to the control signal, but if the user does not respond by performing enough of the correct action, then the time threshold ensures further action is taken to alert the driver to perform a further action. Therefore, the time threshold may be equal to that discussed above, but is preferably a different time threshold, i.e., a different length of time. That is, the user is provided with a first time threshold to show compliance to the control signal (step SC7a) and a second threshold to conform to the imposed speed limit (SC8b). If the determination is that the time difference is less than the threshold, then the method moves to step SC9a. If, in contrast, the time difference is larger or greater than the time threshold, the method moves to step SC9.

As shown in Fig. 7, the period from T4 to T5 shows a second level of deceleration. The second level of deceleration may be approximately equal to the first level of deceleration in magnitude, or it may not. A predetermined tolerance to the deceleration may be used in the compliance means 30, essentially as the deceleration is likely to not be a linear relationship with time. One can see that the period T5 to T6, while showing deceleration, may not show a deceleration that is similar to that of the first and second levels. That is, a user may start decelerating, by applying the brakes for example, but may ease off the brakes too early thus decreasing the magnitude of the deceleration. Thus, as an alternative or in addition, the determination of deceleration may indicate a deceleration of an appropriate level before generating the compliance signal. That is, a deceleration of 0.1 ms$^{-1}$ may not be sufficient to enable deceleration to be detected at step SC5, and thus the control signal is still maintained, for example.

Regarding step SC9, the generation of the second control signal, the method may continue by storing a time at which second control signal is generated, step SC10. As before, a time difference may be calculated from this time, and thus compared to a further time threshold, step SC11, as discussed previously. This may be performed if, for example, the second control signal is to act as a more severe warning to the user. A message such as "Slow down or you will incur a fine" or the like may be presented. If the time difference is less than the threshold, the method moves back to step SC9 and maintains the second control signal. If the time difference exceeds the further time threshold, then the authorities may be alerted, step SC12. This may include communicating with the remote server 6 or authority system 20, for example. Additionally, a third control signal informing the user that they have been fined or that the authorities have been alerted may be issued. As an alternative, the generation of the second control signal may automatically alert the authorities at step SC12. Once the second control signal is generated, the data is also passed to step SC9a such that the method may continue and the next position element processed. Additionally, once the authorities have been alerted at step SC12, the maintenance of the second control signal may be performed, i.e., return back to SC9.

As an example of the method described above, the relevant locations of Fig. 7 will be explained in relation to the various steps of Fig.6. At T1 a control signal is generated (SC1). At T2, deceleration is not detected and the control signal maintained (SC6a); note that the time threshold is not exceeded at time T2. At time T3, however, deceleration is still not detected, but the time threshold is exceeded (YES at SC7a), and thus the second control signal is generated (SC9). The user responds and decelerates, and at time T4, a compliance signal is generated (SC6b). Note that this replaces the second control signal, such that preferably only one of the control signal, second control signal, and compliance signal is generated by the signalling means 18 at any one time.

At time T5, the compliance is still detected, and the next data element processed (SC9a). At T6, however, the time difference is larger than the threshold (YES at SC8b) and thus a second control signal is generated (SC9). The user responds by decelerating to below the speed limit at time T7, and thus step S6 and S7 are performed in Fig. 4. Optionally, a compliance signal indicating the speed limit is not exceeded may be generated (S8).

As discussed above, Fig. 6 also indicates an exemplary method for using the device of Fig 5b. When the control signal is generated at step SC1, the time of receipt of the control signal may be optionally stored at step SC2. The speed and location are irrelevant for this method, as the speed is not measured explicitly. When the control signal is received, the compliance means 30 monitors a system or component of the vehicle 2, at step SC13. For ease of discussion, the component herein will be the throttle pedal or control of a vehicle 2, but it should be appreciated that any system that the user may use to control the speed of the vehicle 2 could be monitored, e.g., a brake pedal, a transmission status, engine rotation speed, etc. The user then chooses to activate the component, i.e., the brake pedal.

The user may be given a predetermined time in order to respond to the control signal, step SC14. This is primarily to avoid generation of the second control signal instantaneously after the control signal is received if the component is not activated. The predetermined time may be a second or so, or may be much shorter or longer. If the component is activated after the predetermined time (YES at step SC14), then a compliance signal is generated at step SC15 (or maintained if already generated). For example, the control signal is received at a time, and one second after this time, the user presses the brake pedal. The component is thus activated after the predetermined time and the compliance signal is activated.

A time at which the compliance signal is generated may optionally be stored, step SC16, and compared with a time threshold as discussed in relation to the device of Fig. 5a. Alternatively, the comparison may be in relation to the time at which the control signal was received if step SC2 is used. Again, the determination of exceeding the time threshold may cause the generation of the second control signal (SC9), and not exceeding the time threshold may cause the method to loop back to step SC14. In this regard, step SC15 may only be active when the control signal is received; that is, when the speed limit is exceed at step S6 of Fig. 4.

If, in contrast, the component is not activated after a predetermined time (NO at SC14) then the second control signal is generated (SC9). As with the device of Fig. 5a, the steps SC10, SC11 and SC12 may also be employed.

Turning to Fig. 7, this method is shown as an example with reference to the various times. As before, a control signal is generated at time T1. The predetermined time may be set to a time of T3 minus T1, for example. At T3, a second control signal is generated as the brake is not pressed between T1 and T3. The user responds by pressing the brake and slowing the vehicle 2 down. At T4 and T5, the time threshold of SC17 is not exceeded, and thus the compliance means 30 continues to monitor the component. At T6, however, the threshold is surpassed (YES at SC17) and a second control signal is generated. At T7, the control signal is not generated as the speed of the vehicle 2 is lower than the imposed speed limit, and thus the step SC14 is no longer active. As above, a compliance signal indicating the speed limit is not exceeded may be optionally generated (S8).

Typically, the compliance means 30 monitors the user's response to the control signal to determine a compliance. The compliance is indicated via a compliance signal which is generated by the signalling means 30 on the basis of a signal from the compliance means 30. Instances of compliance, i.e., a positive or correct response to the control signal, may be stored as data in the log, as discussed above.

In some embodiments, the compliance signal may be a signal that determines that the user does not comply with the control signal. That is, the control signal is provided and, after a predetermined amount of time (that may be equal to zero time), the compliance means 30 detects that no deceleration is present (according to the methods described above) and issues a signal indicative of no compliance. In this regard, the signalling means 18 issues a non-compliance signal in a similar manner to the compliance signal defined above. In this regard, the non-compliance signal may be provided alternatively to, or in addition to, the compliance signal. When the two are provided together, the compliance and non-compliance signals may be provided as similar warnings or the like, but are different. For example, the compliance signal may be represented by a green light and the non-compliance signal may be represented by a red light. In other embodiments, the non-compliance signal may be synonymous with the control signal. That is, when non-compliance is detected, the non-compliance signal is simply a continuation of the initial control signal.

In some instances, however, a rigid utilisation of the imposed speed limit is not desired. This is especially noticeable for the changing of a speed limit. For example, moving from a 30 kph to a 50 kph includes some time where the vehicle must accelerate up to 50 kph. In many instances it is often safer to perform the acceleration in the restricted zone, so as to allow for a seamless transition between the two speed limits. Fig. 8 shows such a situation on a time versus speed graph, wherein two imposed speed limits are shown; SPL1 and SPL2. Here, one can see that the user is accelerating beyond SPL1 before the region where SPL2 is in force.

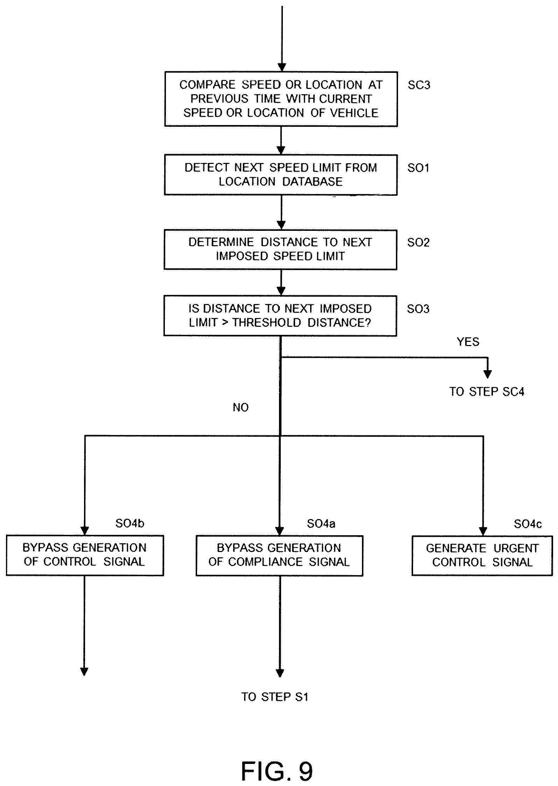

Fig. 9 shows an exemplary method for such situations. The compliance means 30 compares the current and previous speed/location at step SC3. At this time, optional step SO1 detects the next speed limit from the location database 12 based upon the current location of the vehicle 2, and in some cases, also the previous location of the vehicle 2. A distance to the next speed limit is then determined at optional step SO2. At step SO3, the calculated distance to the next imposed speed limit is compared to at least one threshold distance. In this regard, the threshold distance may be constant for all speed limits, or it may be speed limit dependent. For example, the distance threshold may be set to 500 m for a 50 kph speed limit. This distance threshold may also be transition dependent; that is, from a 30 kph to a 50 kph the distance threshold is 500m, but for a 40 kph to a 50 kph the distance threshold is set to 300m, for example.

In this regard, if the distance to the next imposed speed limit is greater than the threshold distance (YES at SO3), the method continues as normal to step SC4. If, on the other hand, the distance is lower than the distance threshold (NO at SO3), the method bypasses the generation of the compliance signal (SO4a) or the control signal (SO4b). Equally, both may be bypassed. This prevents the situation where the user is close to the speed limit, i.e., with a time from $t_L$ to $t_{SL}$ of Fig. 8, from receiving a signal to comply with the speed limit. In other words, this prevents the user from being forced to slow down by the compliance signal directly before a change to a faster speed limit. Additionally, the same system is used when the user or vehicle 2 moves from a high speed limit (SPL2) to a low speed limit (SPL1), thus enabling the user time to decelerate to the appropriate speed limit. For example, a control signal is not generated in the period from $t_L$ to $t_{SL}$ of Fig. 8.

Additionally, the compliance means 30 may be adapted to provide a different warning in the case of temporary or stepped-down speed limits. For example, between SC2 and SC3 or SC13 of Fig.6, the compliance means 30 may determine whether or not the speed limit is a stepped-down speed limit, and if it is, issue a control signal accordingly. For example, if the speed limit is a stepped-down limit, the compliance means 30 may automatically issue a warning for the user to brake or slow down, regardless of the actions of the user. In this regard, whenever the user exceeds the speed limit of the stepped-down speed limit a control signal is generated, SC6 and SC9. Then, if the speed limit is a stepped-down speed limit, the user is informed to brake. This message is displayed until the vehicle coincides with the speed limit.

In addition, the system may use a predictive system to identify the next section of the stepped-down limit, as discussed above. In this sense, the compliance means 30 may also be provided with the method of Fig. 9, and detect the next distance to the next step of the stepped-down speed limit. Rather than bypass the control signal or compliance signal, however, if the distance to the next step is deemed to be smaller than the distance threshold, the compliance means 30 may be adapted to generate an urgent control signal, step SO4c, that informs the vehicle 2 to slow down greatly. This may include a warning or a vehicle control signal.

In essence, the present invention is provided so as to alert the user of a vehicle 2 to an excessive speeding condition, wherein the current speed of the vehicle 2 is larger than a location-based imposed speed limit, and monitor a response of the user thereto. In this regard, the user may be provided with a level of compliance, in the form of a compliance signal for example. This indicates that the user is conforming to the location-based imposed speed limit and the generated control signal. Such information may be used in defence of a user, or to show "good" behaviour of the user on the roadway. Equally, the compliance signal informs a user that the correct action is being undertaken and that the user is actively attempting to reduce the speed of the vehicle 2.

## Claims

1. A graded control signal system for warning a user of a vehicle (2), the system comprising;
position providing means (4) disposed in the vehicle (2) and adapted to provide a location of the vehicle;
determining means (10) disposed in the vehicle (2) or a remote server (6) and adapted to determine the location-based imposed speed limit by comparing the location of the vehicle with a location database (12), the location database including location-based imposed speed limits for a plurality of locations;
comparison means (14) disposed in the vehicle (2) or the remote server (6) and adapted to compare the current speed of the vehicle with a plurality of threshold values for each location of the vehicle wherein the location-based imposed speed limit provided by the determining means is one of these threshold values;
signalling means (18) adapted to produce a control signal responsive to an output of the comparison means (14), the control signal adapted to at least one of provide a warning and automatically control the current speed of the vehicle; and
compliance means (30) provided in the vehicle or the remote server adapted to determine if the user or vehicle complies with the control signal, wherein
if the user or vehicle complies with the control signal, the signalling means (18) is adapted to generate a compliance signal on the basis of an output from the compliance means (30) and/or, if the user or vehicle does not comply with the control signal, the signalling means (18) is adapted to generate a non-compliance signal on the basis of the output from the compliance means, and wherein
the compliance means (30) is adapted to monitor the response to the control signal over a pre-set period of time, setting a time threshold that indicates a time for which the user or vehicle should respond to the control signal and wherein
the compliance means (30) measures the user's or vehicle's response to the control signal by comparing a first current speed of the vehicle determined at a first time with a second current speed of the vehicle determined at a second time, the second time at a later time than the first time

2. The system of claim 1, wherein the system is configured to provide a predictive or pre-warning system, the signalling means (18) being adapted to provide a changing speed limit warning to alert the user that a different imposed speed limit will be enforced in the next stretch of road.

3. The system of any of the preceding claims wherein, a compliance signal is generated all the time that the user is responding to the control signal, but if the user does not respond by performing enough of the correct action, to sufficiently correct the current speed of the vehicle then the time threshold ensures further action is taken to alert the driver to perform a further action either by a repetition of the control signal, or by generating a second or a third control signal.

4. The system of any of the preceding claims wherein the compliance means (30) is adapted to determine if the location-based imposed speed limit is a stepped-down speed limit, and communicate with the signalling means (18) to provide a specific urgent control signal if the location-based speed limit is a stepped-down speed limit and the vehicle (2) exceeds the location-based imposed speed limit.

5. The system of any of the preceding claims wherein the system is configured to provide a predictive acceleration of the vehicle and issue a control signal before the vehicle (2) exceeds the location-based imposed speed limit.

6. The system of any of the preceding claims wherein the compliance means (30) is adapted to monitor the deceleration or acceleration of the vehicle (2) the deceleration or acceleration being indicative of the response to the control signal, or the compliance means is adapted to monitor an actuation of a component of the vehicle, the component being user operated and able to affect the speed of the vehicle.

7. The system of claim 6, wherein the compliance means (30) is provided with an onboard storage (22) for storing the location-based imposed speed limit and the current speed of the vehicle (2) at a first time, and wherein the vehicle is provided with speed determining means (8) for calculating or determining a second current speed of the vehicle at a second time, wherein the deceleration or acceleration is determined by the compliance means on the basis of the difference between the second speed of the vehicle and the first speed of the vehicle and the difference between the second time and the first time.

8. A method for warning a user of a vehicle by means of a graded control signal system, the method comprising:

a detecting step for detecting a location of the vehicle;
a determining step for determining the location-based imposed speed limit by comparing the location of the vehicle with a location information stored in a location database, the location information including location-based imposed speed limits for a plurality of locations;
a comparing step for comparing a first current speed of the vehicle with the location-based imposed speed limit with a plurality of threshold values for each location of the vehicle wherein the location-based imposed speed limit provided by the determining means is one of these threshold values;
a generating step for generating a control signal responsive to the result of the comparing step, wherein the control signal is adapted to one of: provide a warning, automatically control the current speed of the vehicle, or a combination thereof; and
a compliance step for monitoring the user or vehicle compliance with the control signal wherein the response is monitored over a pre-set period of time and, setting a time threshold that indicates a time for which the user or vehicle should respond to the control signal;
and wherein
the compliance step includes comparing a first current speed of the vehicle determined at a first time with a second current speed of the vehicle determined at a second time, the second time at a later time than the first time

9. The method of any of claims 8 to 9, wherein, when the compliance to a control signal is detected, the control signal is changed.

10. The method of any of claims 9 to 10 wherein, a compliance signal is generated all the time that the user is responding to the control signal, but if the user does not respond by performing enough of the correct action, to sufficiently correct the current speed of the vehicle then the time threshold ensures further action is taken to alert the driver to perform a further action either by repeating the control signal, or by generating a second or a third control signal.

11. The method of any of claims 9 to 12 wherein the compliance step is adapted to monitor the deceleration or acceleration of the vehicle, the deceleration or acceleration being indicative of the response to the control signal, or by monitoring the user's interaction with a component of the vehicle that is adapted to control the speed of the vehicle.

12. The method of claim 13, comprising a storing step for storing the location-based imposed speed limit and the first current speed of the vehicle at a first time, calculating or determining the second current speed of the vehicle at a second time, and wherein the deceleration or acceleration is determined on the basis of the difference between the second speed of the vehicle and the first speed of the vehicle and the difference between the second time and the first time.

13. The method of any of the claims 8 to 14, wherein the system is configured to provide a predictive or pre-warning system, the generating step being adapted to provide a changing speed limit warning to alert the user that a different imposed speed limit will be enforced in the next stretch of road.

**Patentansprüche**

1. Abgestuftes Steuerungssignalsystem zum Warnen eines Nutzers eines Fahrzeugs (2), wobei das System Folgendes umfasst:

ein Positionsbereitstellungsmittel (4), das in dem Fahrzeug (2) angeordnet und dazu ausgelegt ist, eine Position des Fahrzeugs bereitzustellen;
ein Bestimmungsmittel (10), das in dem Fahrzeug (2) oder einem entfernten Server (6) angeordnet und dazu ausgelegt ist, das positionsabhängig geltende Geschwindigkeitslimit durch Vergleichen der Position des Fahrzeugs mit einer Positionsdatenbank (12) zu bestimmen, wobei die Positionsdatenbank positionsabhängig geltende Geschwindigkeitslimits für eine Vielzahl von Positionen umfasst;

ein Vergleichsmittel (14), das in dem Fahrzeug (2) oder dem entfernten Server (6) angeordnet und dazu ausgelegt ist, die aktuelle Geschwindigkeit des Fahrzeugs mit einer Vielzahl von Schwellenwerten für jede Position des Fahrzeugs zu vergleichen, wobei das durch das Bestimmungsmittel bereitgestellte, positionsabhängig geltende Geschwindigkeitslimit einer dieser Schwellenwerte ist;

ein Signalisierungsmittel (18), das dazu ausgelegt ist, in Reaktion auf einen Ausgang des Vergleichsmittels (14) ein Steuersignal zu produzieren, wobei das Steuersignal dazu ausgelegt ist, mindestens eine Warnung bereitzustellen oder automatisch die aktuelle Geschwindigkeit des Fahrzeugs zu steuern; und

ein Einhaltungsmittel (30), das in dem Fahrzeug oder dem entfernten Server bereitgestellt und dazu ausgelegt ist, festzustellen, ob der Nutzer oder das Fahrzeug das Steuersignal einhält, wobei

dann, wenn der Nutzer oder das Fahrzeug das Steuersignal einhält, das Signalisierungsmittel (18) dazu ausgelegt ist, ein Einhaltungssignal auf der Grundlage eines Ausgangs von dem Einhaltungsmittel (30) zu erzeugen, und/oder

dann, wenn der Nutzer oder das Fahrzeug das Steuersignal nicht einhält, das Signalisierungsmittel (18) dazu ausgelegt ist, ein Nichteinhaltungssignal auf der Grundlage des Ausgangs von dem Einhaltungsmittel zu erzeugen und wobei

das Einhaltungsmittel (30) dazu ausgelegt ist, die Reaktion auf das Steuersignal über einen voreingestellten Zeitraum zu überwachen, wobei eine zeitliche Schwelle festgelegt wird, die eine Zeit angibt, in der der Benutzer oder das Fahrzeug auf das Steuersignal reagieren sollte, und wobei

das Einhaltungsmittel (30) die Reaktion des Nutzers oder des Fahrzeugs auf das Steuersignal durch Vergleichen einer ersten aktuellen Geschwindigkeit des Fahrzeugs, die zu einer ersten Zeit festgestellt wurde, mit einer zweiten aktuellen Geschwindigkeit des Fahrzeugs, die zu einer zweiten Zeit festgestellt wurde, misst, wobei die zweite Zeit eine im Vergleich zur ersten Zeit spätere Zeit ist.

2.  System nach Anspruch 1, wobei das System dazu ausgelegt ist, ein prädiktives oder Vorwarnsystem bereitzustellen, wobei das Signalisierungsmittel (18) dazu ausgelegt ist, eine Warnung über ein geändertes Geschwindigkeitslimit bereitzustellen, um den Benutzer zu warnen, dass auf der nächsten Strecke der Straße ein anderes geltendes Geschwindigkeitslimit in Kraft gesetzt wird.

3.  System nach einem der vorangehenden Ansprüche, wobei
ein Einhaltungssignal immer dann erzeugt wird, wenn der Benutzer auf das Steuersignal reagiert, doch wenn der Benutzer nicht durch Ausführen einer ausreichenden Korrekturhandlung reagiert, um die aktuelle Geschwindigkeit des Fahrzeugs ausreichend zu korrigieren, wird durch die zeitliche Schwelle sichergestellt, dass eine weitere Maßnahme unternommen wird, um den Fahrer darauf aufmerksam zu machen, eine weitere Handlung auszuführen, entweder durch eine Wiederholung des Steuersignals oder durch Erzeugen eines zweiten oder dritten Steuersignals.

4.  System nach einem der vorangehenden Ansprüche, wobei das Einhaltungsmittel (30) dazu ausgelegt ist, festzustellen, ob das positionsabhängig geltende Geschwindigkeitslimit ein abgesenktes Geschwindigkeitslimit ist, und mit dem Signalisierungsmittel (18) zu kommunizieren, um ein spezifisches dringendes Steuersignal bereitzustellen, wenn das positionsabhängige Geschwindigkeitslimit ein abgesenktes Geschwindigkeitslimit ist und das Fahrzeug (2) das positionsabhängig geltende Geschwindigkeitslimit überschreitet.

5.  System nach einem der vorangehenden Ansprüche, wobei das System dazu ausgelegt ist, eine prädiktive Beschleunigung des Fahrzeugs bereitzustellen und ein Steuersignal auszugeben, bevor das Fahrzeug (2) das positionsabhängig geltende Geschwindigkeitslimit überschreitet.

6.  System nach einem der vorhergehenden Ansprüche, wobei das Einhaltungsmittel (30) dazu ausgelegt ist, die Verlangsamung oder Beschleunigung des Fahrzeugs (2) zu überwachen, wobei die Verlangsamung oder Beschleunigung bezeichnend für die Reaktion auf das Steuersignal ist, oder das Einhaltungsmittel ist dazu ausgelegt, ein Ansprechen einer Komponente des Fahrzeugs zu überwachen, wobei die Komponente vom Nutzer betätigt wird und in der Lage ist, die Geschwindigkeit des Fahrzeugs zu beeinflussen.

7.  System nach Anspruch 6, wobei das Einhaltungsmittel (30) mit einem Bordspeicher (22) zum Speichern des positionsabhängig geltenden Geschwindigkeitslimits und der aktuellen Geschwindigkeit des Fahrzeugs (2) zu einer ersten Zeit versehen ist, und wobei das Fahrzeug mit einem Geschwindigkeitserkennungsmittel (8) versehen ist, um eine zweite aktuelle Geschwindigkeit des Fahrzeugs zu einer zweiten Zeit zu berechnen oder festzustellen, wobei die Verlangsamung oder Beschleunigung durch das Übereinstimmungsmittel auf der Grundlage der Differenz zwischen der zweiten Geschwindigkeit des Fahrzeugs und der ersten Geschwindigkeit des Fahrzeugs und der Differenz zwischen der zweiten Zeit und der ersten Zeit bestimmt wird.

8. Verfahren zum Warnen eines Nutzers eines Fahrzeugs mittels eines abgestuften Steuersignalsystems, wobei das Verfahren Folgendes umfasst:

einen Erkennungsschritt zum Erkennen einer Position des Fahrzeugs;
einen Bestimmungsschritt zum Bestimmen des positionsabhängig geltenden Geschwindigkeitslimits durch Vergleichen der Position des Fahrzeugs mit in einer Positionsdatenbank gespeicherten Positionsinformationen, wobei die Positionsinformationen positionsabhängig geltende Geschwindigkeitslimits für eine Vielzahl von Positionen beinhalten;
einen Vergleichsschritt zum Vergleichen einer ersten aktuellen Geschwindigkeit des Fahrzeugs mit dem positionsabhängig geltenden Geschwindigkeitslimit mit einer Vielzahl von Schwellenwerten für jede Position des Fahrzeugs, wobei das durch das Bestimmungsmittel bereitgestellte positionsabhängig geltende Geschwindigkeitslimit einer dieser Schwellenwerte ist;
einen Generierungsschritt zum Generieren eines Steuersignals in Reaktion auf das Ergebnis des Vergleichsschritts, wobei das Steuersignal dazu ausgelegt ist: eine Warnung auszugeben, automatisch die aktuelle Geschwindigkeit des Fahrzeugs zu steuern, oder eine Kombination davon; und
einen Übereinstimmungsschritt zum Überwachen der Einhaltung des Steuersignals durch den Nutzer oder das Fahrzeug, wobei die Reaktion über einen voreingestellten Zeitraum überwacht wird und eine zeitliche Schwelle festgelegt wird, die eine Zeit angibt, in welcher der Nutzer oder das Fahrzeug auf das Steuersignal reagieren sollte;
und wobei
der Übereinstimmungsschritt das Vergleichen einer ersten aktuellen Geschwindigkeit des Fahrzeugs, die zu einer ersten Zeit festgestellt wurde, mit einer zweiten aktuellen Geschwindigkeit des Fahrzeugs, die zu einer zweiten Zeit festgestellt wurde, beinhaltet, wobei die zweite Zeit eine im Vergleich zur ersten Zeit spätere Zeit ist.

9. Verfahren nach einem der Ansprüche 8 bis 9, wobei dann, wenn die Übereinstimmung mit einem Steuersignal erkannt wird, das Steuersignal verändert wird.

10. Verfahren nach einem der Ansprüche 9 bis 10, wobei ein Übereinstimmungssignal zu jeder Zeit erzeugt wird, in welcher der Nutzer auf das Steuersignal reagiert, doch wenn der Nutzer nicht durch Ausführen einer ausreichenden Korrekturhandlung reagiert, um die aktuelle Geschwindigkeit des Fahrzeugs ausreichend zu korrigieren, dann wird durch die zeitliche Schwelle gewährleistet, dass eine weitere Maßnahme unternommen wird, um den Fahrer darauf aufmerksam zu machen, eine weitere Handlung auszuführen, entweder durch Wiederholung des Steuersignals oder durch Erzeugen eines zweiten oder dritten Steuersignals.

11. Verfahren nach einem der Ansprüche 9 bis 12, wobei der Übereinstimmungsschritt dazu ausgelegt ist, die Verlangsamung oder Beschleunigung des Fahrzeugs zu überwachen, wobei die Verlangsamung oder Beschleunigung bezeichnend für die Reaktion auf das Steuersignal ist, oder durch Überwachen der Interaktion des Nutzers mit einer Komponente des Fahrzeugs, die dazu ausgelegt ist, die Geschwindigkeit des Fahrzeugs zu steuern.

12. Verfahren nach Anspruch 13, das einen Schritt des Speicherns zum Speichern des positionsabhängig geltenden Geschwindigkeitslimits und der ersten aktuellen Geschwindigkeit des Fahrzeugs zu einer ersten Zeit und des Berechnens oder Bestimmens der zweiten aktuellen Geschwindigkeit des Fahrzeugs zu einer zweiten Zeit umfasst, und wobei die Verlangsamung oder Beschleunigung auf der Grundlage der Differenz zwischen der zweiten Geschwindigkeit des Fahrzeugs und der ersten Geschwindigkeit des Fahrzeugs und der Differenz zwischen der zweiten Zeit und der ersten Zeit bestimmt wird.

13. Verfahren nach einem der Ansprüche 8 bis 14, wobei das System dazu ausgelegt ist, ein prädiktives oder Vorwarnsystem bereitzustellen, wobei der Schritt des Erzeugens dazu ausgelegt ist, eine Warnung über ein geändertes Geschwindigkeitslimit bereitzustellen, um den Benutzer zu warnen, dass auf der nächsten Strecke der Straße ein anderes geltendes Geschwindigkeitslimit in Kraft gesetzt wird.

**Revendications**

1. Système de signal de commande gradué pour avertir un utilisateur d'un véhicule (2), le système comprenant :

des moyens de fourniture de position (4) disposés dans le véhicule (2) et adaptés pour fournir une localisation du véhicule ;

des moyens de détermination (10) disposés dans le véhicule (2) ou un serveur distant (6), et adaptés pour déterminer la limite de vitesse imposée basée sur la localisation en comparant la localisation du véhicule avec une base de données de localisation (12), la base de données de localisation comprenant des limites de vitesse imposées basées sur la localisation pour une pluralité de localisations ;

des moyens de comparaison (14) disposés dans le véhicule (2) ou le serveur distant (6), et adaptés pour comparer la vitesse courante du véhicule avec une pluralité de valeurs seuils pour chaque localisation du véhicule, la limite de vitesse imposée basée sur la localisation fournie par les moyens de détermination étant une de ces valeurs seuils ;

des moyens de signalisation (18) adaptés pour produire un signal de commande sensible à une sortie des moyens de comparaison (14), le signal de commande étant adapté pour au moins l'une parmi la fourniture d'un avertissement et la commande automatique de la vitesse courante du véhicule ; et

des moyens de conformité (30) prévus dans le véhicule ou le serveur distant, adaptés pour déterminer si l'utilisateur ou le véhicule se conforme au signal de commande, si l'utilisateur ou le véhicule se conforme au signal de commande, les moyens de signalisation (18) étant adaptés pour générer un signal de conformité sur la base d'une sortie des moyens de conformité (30) et/ou, si l'utilisateur ou le véhicule ne se conforme pas au signal de commande, les moyens de signalisation (18) étant adaptés pour générer un signal de non-conformité sur la base de la sortie des moyens de conformité, et

les moyens de conformité (30) étant adaptés pour surveiller la réponse au signal de commande pendant une période de temps prédéfinie, en fixant un seuil temporel qui indique un temps pendant lequel l'utilisateur ou le véhicule doit répondre au signal de commande, et les moyens de conformité (30) mesurant la réponse de l'utilisateur ou du véhicule au signal de commande en comparant une première vitesse courante du véhicule déterminée à un premier instant avec une seconde vitesse courante du véhicule déterminée à un second instant, le second instant étant un instant ultérieur au premier instant.

2. Système selon la revendication 1, le système étant configuré pour fournir un système de prédiction ou de pré-avertissement, les moyens de signalisation (18) étant adaptés pour fournir un avertissement de limitation de vitesse variable pour alerter l'utilisateur qu'une limitation de vitesse imposée différente sera appliquée sur le tronçon de route suivant.

3. Système selon l'une quelconque des revendications précédentes, un signal de conformité étant généré tant que l'utilisateur répond au signal de commande, mais si l'utilisateur ne répond pas en réalisant suffisamment l'action correcte, pour corriger suffisamment la vitesse courante du véhicule, alors le seuil temporel assure qu'une action supplémentaire est entreprise pour alerter le conducteur de réaliser une action supplémentaire, par la répétition du signal de commande, ou par la génération d'un deuxième ou d'un troisième signal de commande.

4. Système selon l'une quelconque des revendications précédentes, les moyens de conformité (30) étant adaptés pour déterminer si la limite de vitesse imposée basée sur la localisation est une limite de vitesse réduite, et communiquer avec les moyens de signalisation (18) pour fournir un signal de commande urgent spécifique si la limite de vitesse adaptée à la localisation est une limite de vitesse réduite et que le véhicule (2) dépasse la limite de vitesse imposée basée sur la localisation.

5. Système selon l'une quelconque des revendications précédentes, le système étant configuré pour fournir une accélération prédictive du véhicule et émettre un signal de commande avant que le véhicule (2) ne dépasse la limite de vitesse imposée basée sur la localisation.

6. Système selon l'une quelconque des revendications précédentes, les moyens de conformité (30) étant adaptés pour surveiller la décélération ou l'accélération du véhicule (2), la décélération ou l'accélération étant indicative de la réponse au signal de commande, ou les moyens de conformité étant adaptés pour surveiller un actionnement d'un composant du véhicule, le composant étant commandé par l'utilisateur et pouvant affecter la vitesse du véhicule.

7. Système selon la revendication 6, les moyens de conformité (30) étant munis d'un dispositif de stockage embarqué (22) pour stocker la limite de vitesse imposée basée sur la localisation et la vitesse courante du véhicule (2) à un premier instant, et le véhicule étant muni de moyens de détermination de vitesse (8) pour calculer ou déterminer une seconde vitesse courante du véhicule à un second instant, la décélération ou l'accélération étant déterminée par les moyens de conformité sur la base de la différence entre la seconde vitesse du véhicule et la première vitesse du véhicule et la différence entre le second instant et le premier instant.

**8.** Procédé pour avertir un utilisateur d'un véhicule au moyen d'un système de signal de commande gradué, le procédé comprenant :

une étape de détection pour détecter une localisation du véhicule ;
une étape de détermination pour déterminer la limite de vitesse imposée basée sur la localisation par comparaison de la localisation du véhicule avec des informations de localisation stockées dans une base de données de localisation, les informations de localisation comprenant les limites de vitesse imposées basées sur la localisation pour une pluralité de localisations ;
une étape de comparaison pour comparer une première vitesse courante du véhicule à la limite de vitesse imposée basée sur la localisation avec une pluralité de valeurs seuils pour chaque localisation du véhicule, la limite de vitesse imposée basée sur la localisation fournie par les moyens de détermination étant une de ces valeurs seuils ;
une étape de génération pour générer un signal de commande sensible au résultat de l'étape de comparaison, le signal de commande étant adapté à l'une des étapes suivantes : fournir un avertissement, commander automatiquement la vitesse courante du véhicule, ou une combinaison de ceux-ci ; et
une étape de conformité pour surveiller la conformité de l'utilisateur ou du véhicule au signal de commande, la réponse étant surveillée pendant une période de temps prédéfinie et, en fixant un seuil temporel qui indique un temps pendant lequel l'utilisateur ou le véhicule doit répondre au signal de commande ; et
l'étape de conformité comprenant la comparaison d'une première vitesse courante du véhicule déterminée à un premier instant avec une seconde vitesse courante du véhicule déterminée à un second instant, le second instant étant un instant ultérieur au premier instant.

**9.** Procédé selon l'une quelconque des revendications 8 et 9, lorsque la conformité à un signal de commande est détecté, le signal de commande étant modifié.

**10.** Procédé selon l'une quelconque des revendications 9 à 10, un signal de conformité étant généré tant que l'utilisateur répond au signal de commande, mais si l'utilisateur ne répond pas en réalisant suffisamment l'action correcte, pour corriger suffisamment la vitesse courante du véhicule, alors le seuil temporel assure qu'une action supplémentaire est entreprise pour alerter le conducteur de réaliser une action supplémentaire, par la répétition du signal de commande, ou par la génération d'un deuxième ou d'un troisième signal de commande.

**11.** Procédé selon l'une quelconque des revendications 9 à 12, l'étape de conformité étant adaptée pour surveiller la décélération ou l'accélération du véhicule, la décélération ou l'accélération étant indicative de la réponse au signal de commande, ou en surveillant l'interaction de l'utilisateur avec un composant du véhicule qui est adapté pour contrôler la vitesse du véhicule.

**12.** Procédé selon la revendication 13, comprenant une étape de stockage pour stocker la limite de vitesse imposée basée sur la localisation et la première vitesse courante du véhicule à un premier instant, calculer ou déterminer la seconde vitesse courante du véhicule à un second instant, et la décélération ou l'accélération étant déterminée sur la base de la différence entre la seconde vitesse du véhicule et la première vitesse du véhicule et la différence entre le second instant et le premier instant.

**13.** Procédé selon l'une quelconque des revendications 8 à 14, le système étant configuré pour fournir un système prédictif ou de pré-avertissement, l'étape de génération étant adaptée pour fournir un avertissement de limitation de vitesse variable pour alerter l'utilisateur qu'une limitation de vitesse imposée différente sera appliquée sur le tronçon de route suivant.

FIG. 1

FIG. 2

20

FIG. 3a

FIG. 3b

FIG 4

36

30

COMPLIANCE
DETERMINATION
MEANS

TO SIGNALLING
MEANS

CONTROL
SIGNAL

MEMORY

32

34

CLOCK

## FIG. 5a

30

36

CONTROL
SIGNAL

COMPLIANCE
DETERMINATION
MEANS

TO SIGNALLING
MEANS

VEHICLE
SISTEM

## FIG. 5b

FIG 6

FIG. 7

FIG. 8

```
              ┌─────────────────────────────┐
              │ COMPARE SPEED OR LOCATION AT │   SC3
              │ PREVIOUS TIME WITH CURRENT   │
              │ SPEED OR LOCATION OF VEHICLE │
              └─────────────────────────────┘
                             │
                             ▼
              ┌─────────────────────────────┐
              │ DETECT NEXT SPEED LIMIT FROM │   SO1
              │      LOCATION DATABASE       │
              └─────────────────────────────┘
                             │
                             ▼
              ┌─────────────────────────────┐
              │  DETERMINE DISTANCE TO NEXT  │   SO2
              │     IMPOSED SPEED LIMIT      │
              └─────────────────────────────┘
                             │
                             ▼
              ┌─────────────────────────────┐
              │  IS DISTANCE TO NEXT IMPOSED │   SO3
              │  LIMIT > THRESHOLD DISTANCE? │
              └─────────────────────────────┘
```

YES

TO STEP SC4

NO

```
         SO4b                    SO4a                     SO4c
  ┌─────────────────┐    ┌─────────────────┐    ┌─────────────────┐
  │ BYPASS GENERATION│    │ BYPASS GENERATION│    │ GENERATE URGENT │
  │ OF CONTROL SIGNAL│    │OF COMPLIANCE SIGNAL│  │ CONTROL SIGNAL  │
  └─────────────────┘    └─────────────────┘    └─────────────────┘
           │                      │
           ▼                      ▼
```

TO STEP S1

# FIG. 9

**EP 2 796 333 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2429100 A
- WO 2012166059 A
- AU 2004202419